# EUROPEAN PATENT SPECIFICATION

(11) **EP 3 301 559 B1**
(45) Date of publication and mention of the grant of the patent: **20.01.2021**
(21) Application number: 17193283.3
(22) Date of filing: 26.09.2017
(51) Int. Cl.: G06F 3/0484, G06F 3/0486, H04M 1/725

(54) **CONTENT SHARING METHOD AND DEVICE**
VERFAHREN UND VORRICHTUNG ZUR GEMEINSAMEN NUTZUNG VON INHALTEN
DISPOSITIF ET PROCÉDÉ DE PARTAGE DE CONTENU

(30) Priority: 29.09.2016 CN 201610865379
(43) Date of publication of application: 04.04.2018
(73) Proprietor: Beijing Xiaomi Mobile Software Co., Ltd., Beijing 100085 (CN)
(72) Inventor: LU, Zhenzhou, Beijing, 100085 (CN); ZHU, Yin, Beijing, 100085 (CN); CHEN, Qiaozhuo, Beijing, 100085 (CN)
(74) Representative: Kudlek, Franz Thomas

(56) References cited:
- US-A1- 2013 326 340
- Daniel Huber: "Screenshot Crop & Share - Android App", You Tube, 15 June 2016 (2016-06-15), page 1, XP054977665, Retrieved from the Internet: URL:https://www.youtube.com/watch?v=DlFfwW KK97U [retrieved on 2017-08-24]
- iTechUOutGuy: "How To: Screenshot With Google Now On Tap", You Tube, 15 December 2015 (2015-12-15), page 1, XP054977666, Retrieved from the Internet: URL:https://www.youtube.com/watch?v=xixgqY M4HEc [retrieved on 2017-08-24]

## Description

### TECHNICAL FIELD

The present disclosure generally relates to the technical field of mobile Internet, and more particularly, to a content sharing method and device, and a terminal.

### BACKGROUND

Along with rapid development of mobile Internet technology, particularly emergence of social media, users may share opinions, ideas, experiences and viewpoints with others anytime anywhere through a social media platform. The users may share information together with pictures, so that shared contents are more visual. At present, a user may select a target picture to be used from a locally stored picture base when the user shares information together with a picture through a social media platform. When a user is reading a certain information page and is intended to share the read information page, the information page is usually captured and stored in a local picture base, and then a captured screenshot is selected from the picture base for sharing on a social media platform. As such, sharing operation is relatively more troublesome.

Daniel Huber: "Screenshot Crop & Share - Android App", You Tube, 15 June 2016 (2016-06-15), page 1, XP054977665, Retrieved from the Internet: URL:https://www.youtube.com/watch?v=DIFfwWKK97U [retrieved on 2017-08-24] discloses an application program of Screenshot Crop & Share, which is a tool for capturing, editing and sharing a screenshot.

Document US 2013/326340 A1 relates to a mobile terminal and a control method thereof. The mobile terminal includes a display unit to output an electronic document page including at least one object, and a controller to select one area on the page in response to a touch input applied onto the display unit, and control the display unit to display the selected one area in a distinguishing manner from the page.

iTechUOutGuy: "How to: Screenshot With Google Now On Tap", You Tube, 15 December 2015 (2015-12-15), page 1, XP054977666, Retrieved from the Internet: URL:https://www.youtube.com/watch?v=xixgqYM4HEc [retrieved on 2017-08-24] discloses a method, which allows users to perform searches within the context of information currently being displayed in an application.

### SUMMARY

The embodiments of the present disclosure provide a content sharing method and device in accordance with claims which follow. The technical solutions are as follows.

According to a first aspect of the present invention, a content sharing method is provided, including that:
when a screen capturing operation instruction is detected, a current display page is captured, and a screenshot corresponding to the current display page is generated;
a preview picture corresponding to the screenshot is generated, and the preview picture is displayed at a preset position of a display screen;
it is detected whether a user switches to a preset page on which a preset application is displayed or not;
when the preset page on which the preset application is displayed currently runs, it is detected whether the user performs a dragging operation on the displayed preview picture or not;
if it is detected that the user performs the dragging operation on the preview picture, the preview picture is moved and displayed according to the dragging operation; and
if it is detected that the preview picture is moved to a target position of the preset page, it is detected whether a sharing triggering instruction for the screenshot is received, and when the sharing triggering instruction is detected, a sharing operation is performed on the screenshot.

According to the above technical solution, after the screenshot is generated and previewed, it is detected whether the user switches to the preset page on which the preset application is displayed or not; when the preset page on which the preset application is displayed currently runs, it is detected whether the user performs the dragging operation on the displayed preview picture or not, and if it is detected that the user performs the dragging operation on the preview picture, the preview picture is moved and displayed according to the dragging operation; and if it is detected that the preview picture is moved to the target position of the preset page, it is detected whether a sharing triggering instruction for the screenshot is received, and when the sharing triggering instruction is detected, the sharing operation is performed on the screenshot. By the dragging operation on the previewed screenshot, the sharing operation on the screenshot may be rapidly implemented, thereby facilitating the operation of the user, and improving user experiences.

According to an exemplary embodiment, the step that the preview picture is displayed at the preset position of the display screen includes that:
the preview picture is displayed at the preset position of the display screen during a preset time, and the preview picture is not displayed any longer after the preset time expires if no operation is performed on the preview picture within the preset time.

According to an exemplary embodiment, the step that the preview picture is displayed at the preset position of the display screen may include that:
the preview picture is displayed in a preset area in a right upper corner of the display screen; or, the preview picture is displayed in a preset area in a left upper corner of the display screen.

According to an exemplary embodiment, the preset application may include: a communication application, or a text edition application.

According to an exemplary embodiment, when the preset application is a communication application, the preset page may include: a contact session page in the communication application, an address book page of the communication application, or a call record interface of the communication application.

According to an exemplary embodiment, the step that the sharing operation is performed on the screenshot may include that: the screenshot is sent to a contact in the communication application to implement sharing of the screenshot.

According to an exemplary embodiment, when the preset application is a text edition application, the preset page may be a text edition page.

According to an exemplary embodiment, the step that the sharing operation is performed on the screenshot may include that:

the screenshot is inserted into a text edition page to implement sharing of the screenshot.

According to an exemplary embodiment, before the step that the sharing operation is performed on the screenshot, the method may include that: the user is prompted whether to share the screenshot or not.

According to a second aspect of the presentinvention, a content sharing device is provided including:
a screen capturing operation module, configured to, when a screen capturing operation instruction is detected, capture a current display page, and generate a screenshot corresponding to the current display page;
a picture generation module, configured to generate a preview picture corresponding to the screenshot, and display the preview picture at a preset position of a display screen;
a first instruction detection module, configured to detect whether a user switches to a preset page on which a preset application is displayed or not;
a second instruction detection module, configured to, when the preset page on which the preset application is displayed currently runs, detect whether the user performs a dragging operation on the displayed preview picture or not;
a processing module, configured to, if it is detected that the user performs the dragging operation on the preview picture, move and display the preview picture according to the dragging operation; and
a content sharing module, configured to, if it is detected that the preview picture is moved to a target position of the preset page, detect whether a sharing triggering instruction for the screenshot is received, and when the sharing triggering instruction is detected, perform a sharing operation on the screenshot.

The advantages and technical effects of the device according to the invention correspond to those of the method presented above.

According to a particular embodiment, the picture generation module is configured to display the preview picture at the preset position of the display screen during a preset time, and not display the preview picture any longer after the preset time expires if no operation is performed on the preview picture within the preset time.

According to a particular embodiment, the picture generation module may be configured to display the preview picture in a preset area in a right upper corner of the display screen; or, display the preview picture in a preset area in a left upper corner of the display screen.

According to a particular embodiment, the preset application may include: a communication application, or a text edition application.

According to a particular embodiment, when the preset application is a communication application, the preset page may include: a contact session page in the communication application, an address book page of the communication application, or a call record interface of the communication application.

According to a particular embodiment, the content sharing module may be configured to send the screenshot to a contact in the communication application to implement sharing of the screenshot.

According to a particular embodiment, when the preset application is a text edition application, the preset page may be a text edition page.

According to a particular embodiment, the content sharing module may be configured to insert the screenshot into a text edition page to implement sharing of the screenshot.

According to a particular embodiment, the device may further include:
an information prompting module, configured to prompt the user whether to share the screenshot or not.

Furthermore, a content sharing device is disclosed including:
a processor; and
a memory configured to store instructions executable by the processor,
wherein the processor is configured to:
when a screen capturing operation instruction is detected, capture a current display page, and generate a screenshot corresponding to the current display page;
generate a preview picture corresponding to the screenshot, and display the preview picture at a preset position of a display screen;
detect whether a user switches to a preset page on which a preset application is displayed or not;
when the preset page on which the preset application is displayed currently runs, detect whether the user performs a dragging operation on the displayed preview picture or not;
if it is detected that the user performs the dragging operation on the preview picture, move and display the preview picture according to the dragging operation; and
if it is detected that the preview picture is moved to a target position of the preset page, detect whether a sharing triggering instruction for the screenshot is received, and when the sharing triggering instruction is detected, perform a sharing operation on the screenshot.

In one particular embodiment, the steps of the content sharing method are determined by computer program instructions.

Consequently, according to a fourth aspect, the invention is also directed to a computer program for executing the steps of a content sharing method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that the above general descriptions and detailed descriptions below are only exemplary and explanatory and not intended to limit the present disclosure.

### BRIEF DESCRIPTION OF THE DRAWINGS

The accompanying drawings, which arc incorporated in and constitute a part of this specification, illustrate embodiments consistent with the present disclosure and, together with the description, serve to explain the principles of the present disclosure.
Fig. 1 is a flow chart showing a content sharing method according to an exemplary embodiment.
Fig. 2 is a flow chart showing a content sharing method according to an exemplary embodiment.
Fig. 3 is a schematic diagram illustrating previewing of a screenshot on a display screen of a terminal according to an exemplary embodiment.
Figs. 4A to 4E are schematic diagrams illustrating an implementation process of sharing a screenshot in a contact session page according to an exemplary embodiment.
Figs. 5A to 5D are schematic diagrams illustrating an implementation process of sharing a screenshot in a call record according to an exemplary embodiment.
Figs. 6A to 6C are schematic diagrams illustrating an implementation process of sharing a screenshot in a memo according to an exemplary embodiment.
Fig. 7 is a block diagram of a content sharing device according to an exemplary embodiment.
Fig. 8 is a block diagram of a content sharing device according to an exemplary embodiment.
Fig. 9 is a block diagram of a content sharing device according to an exemplary embodiment.

By the accompanying drawings, definite embodiments of the present disclosure have been shown, and more detailed descriptions will be made hereinafter. These accompanying drawings and text descriptions are not intended to limit the scope of the concept of the present disclosure in any manner but to describe the concept of the present disclosure for those skilled in the art with reference to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

Terms used in the present disclosure are not intended to limit the present disclosure but only to describe a purpose of a specific embodiment. The terms "A", "said" and "the", used in the present disclosure and the appended claims, indicating a singular form arc also intended to include a plural form unless other meanings arc clearly represented in the context. It also should be understood that the term "and/or" used in the present disclosure refers to and includes any or all possible combinations of one or more associated listed items.

It should be understood that various kinds of information may be described by adopting the terms such as first, second and third in the present disclosure, but the information should not be limited to these terms. These terms are only adopted to distinguish the information of the same type from each other. For example, without departing from the scope of the present disclosure, first information may also be called second information, and similarly, the second information may also be called the first information. It depends on a context, and for example, the word "if' used herein may be explained as "when" or "while" or "in response to determination".

The technical solutions provided by the embodiments of the present disclosure are applied to a terminal, the terminal may be any smart terminal which may be subjected to a touch operation through a touch screen, for example, including, but not limited to, a smart phone, a tablet computer and a Personal Digital Assistant (PDA). It is easy for those skilled in the art to understand that the embodiments of the present disclosure may also be applied to any touch screen terminal with a processor and a display output device.

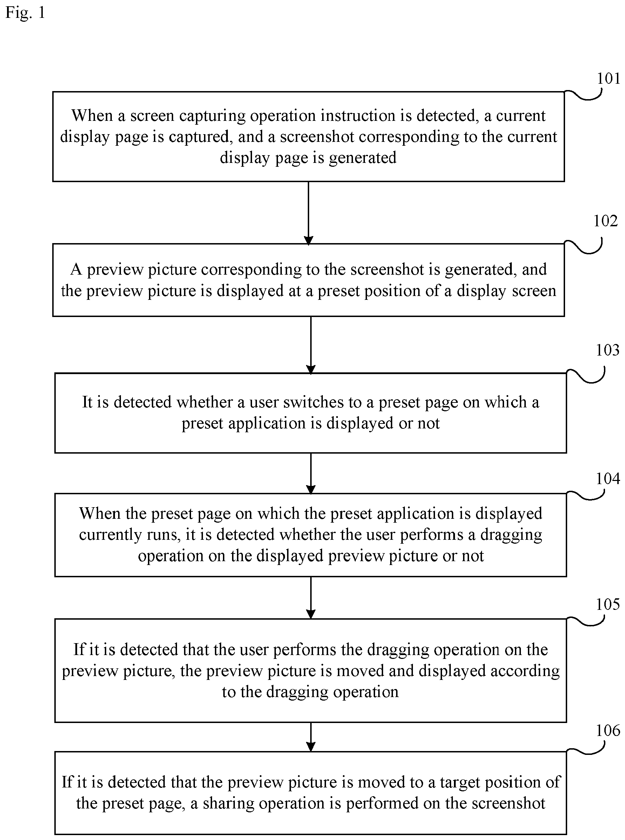

The embodiments of the present disclosure provide a content sharing method applied to the abovementioned terminal. Referring to Fig. 1, Fig. 1 is a flow chart showing a content sharing method according to an exemplary embodiment. The method may include the following steps.

At Step 101, when a screen capturing operation instruction is detected, a current display page is captured, and a screenshot corresponding to the current display page is generated.

In an embodiment, if reading a favorite content during content browsing through the terminal, a user may reserve the favorite content in a screen capturing manner. For example, the screen capturing operation instruction may be sent to the terminal through a fast operation key or instruction. After receiving the screen capturing operation instruction, the terminal captures the current display page, and generates the screenshot corresponding to the current display page for the user. The user may perform storage, sharing or another operation on the screenshot. In an embodiment, the generated screenshot may be stored in a local picture base of the terminal as a default.

At Step 102, a preview picture corresponding to the screenshot is generated, and the preview picture is displayed at a preset position of a display screen.

In the embodiment of the present disclosure, the step that the preview picture is displayed at the preset position of the display screen includes that:
the preview picture is displayed at the preset position of the display screen during a preset time; and
the preview picture is not displayed any longer after the preset time expires if no operation is performed on the preview picture within the preset time.

Optionally, the step that the preview picture is displayed at the preset position of the display screen may include, but not limited to, that:
the preview picture is displayed in a preset area in a right upper corner of the display screen; or, the preview picture is displayed in a preset area in a left upper corner of the display screen.

In such a manner, the terminal displays the preview picture of the screenshot at the preset position of the screen of the terminal to the user, and the user may see the screenshot on the current display screen without switching to the local picture base, so that the user may subsequently perform some other operations, such as marking, sharing and editing, on the screenshot conveniently.

In an embodiment, the preview picture corresponding to the screenshot may also be called a thumbnail corresponding to the screenshot, and either the preview picture or the thumbnail is an ingress for rapidly displaying the screenshot to the user to enable the user to rapidly view the screenshot through the preview picture or the thumbnail without switching to the local picture base for viewing. In the embodiment, the preview picture is collectively called.

At Step 103, it is detected whether a user switches to a preset page on which a preset application is displayed or not.

In an embodiment, the preset application may include, but not limited to: a communication application, or a text edition application.

The text edition application may be office application software such as Word and PPT, and text edition software such as a memo and a note; and the communication application may be a communication tool such as an instant messaging application, short message service, a telephone application or Social Network Service (SNS) application software.

In an embodiment, the user may switch to the preset page on which the preset application is displayed through an application switching operation instruction.

In an embodiment, when the preset application is a communication application, the preset page may include: a contact session page in the communication application, an address book page of the communication application, or a call record interface of the communication application.

In an embodiment, when the preset application is a text edition application, the preset page may be a text edition page.

At Step 104, when the preset page on which the preset application is displayed currently runs, it is detected whether the user performs a dragging operation on the displayed preview picture or not.

At Step 105, if it is detected that the user performs the dragging operation on the preview picture, the preview picture is moved and displayed according to the dragging operation.

At Step 106, if it is detected that the preview picture is moved to a target position of the preset page, a sharing operation is performed on the screenshot.

In an embodiment, when the preset page is the contact session page in the communication application, the address book page of the communication application or the call record interface of the communication application, the step that the sharing operation is performed on the screenshot may include that: the screenshot is sent to a contact in the communication application to implement sharing of the screenshot. Here, the operation that the screenshot is sent to the contact in the communication application refers to that an original of the screenshot is sent to the contact in the communication application.

In an embodiment, the target position of the preset page may be: an area of a message input box of the contact session page, a position of a certain contact item in the address book page or a position of a certain call record item in the call record interface. For example, if it is detected that the preview picture is dragged and moved into the message input box of the contact session page in the communication application, the screenshot is sent to a contact of a current session; if it is detected that the preview picture is dragged and moved to a certain contact item in the address book page, the screenshot is sent to the contact; and if it is detected that the preview picture is dragged and moved to a position of a certain call record item in call records, the screenshot is sent to a contact corresponding to the call record.

In another embodiment, when the screenshot is sent to the contact in the communication application to implement sharing of the screenshot, the original of the screenshot may not be sent to the contact in the communication application. Instead, only the preview picture corresponding to the screenshot is shared to the contact, so that sharing of the screenshot may still be implemented only with a definition of the screenshot received by the contact being relatively lower, but a data volume during data communication may be reduced, and a sending speed during sharing of the screenshot may be increased under the condition that a network condition is not so ideal.

In an embodiment, when the preset page is a text edition page, the step that the sharing operation is performed on the screenshot may include that: the screenshot is inserted into a text edition page to implement sharing of the screenshot.

In an embodiment, when the text edition page is a memo edition page, if it is detected that the preview picture is moved to a certain line of the memo edition page, the screenshot is inserted into the text line of the memo edition page. Alternatively, when the text edition page is office edition software, if it is detected that the preview picture is moved to a certain position of the text edition page, the screenshot is inserted to the position.

In the embodiment of the present disclosure, before the step that the sharing operation is performed on the screenshot, the method may further include that: the user is prompted whether to share the screenshot or not to prevent a false touch operation.

From the above, according to the technical solutions, after the screenshot is generated and previewed, it is detected whether the user switches to the preset page on which the preset application is displayed or not; when the preset page on which the preset application is displayed currently runs, it is detected whether the user performs the dragging operation on the displayed preview picture or not, and if it is detected that the user performs the dragging operation on the preview picture, the preview picture is moved and displayed according to the dragging operation; and if it is detected that the preview picture is moved to the target position of the preset page, the sharing operation is performed on the screenshot. By the dragging operation on the previewed screenshot, the sharing operation on the screenshot may be rapidly implemented, thereby facilitating the operation of the user, and improving user experiences.

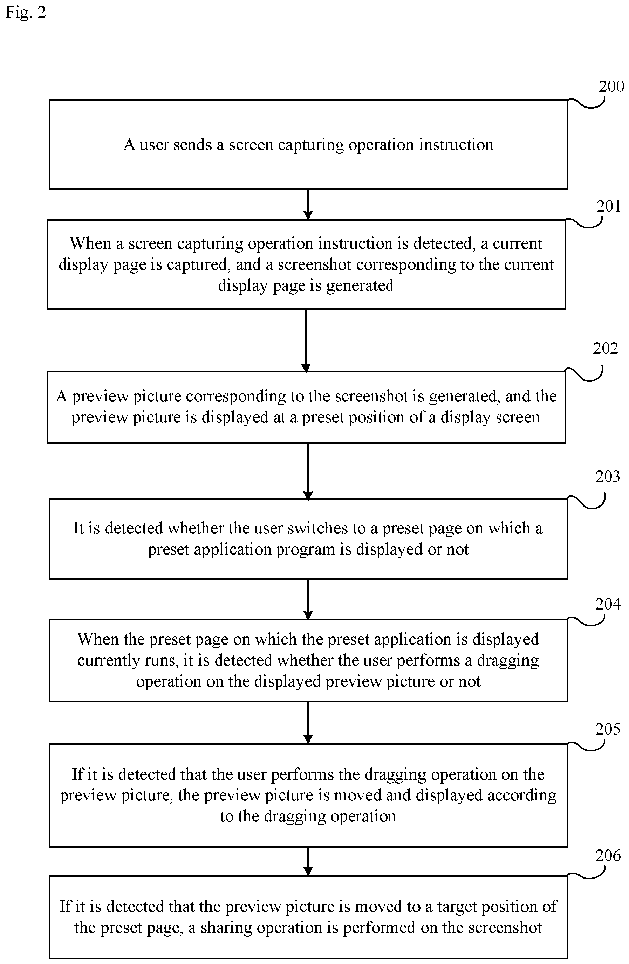

Referring to Fig. 2, Fig. 2 is a content sharing method according to an exemplary embodiment. The method is applied to the abovementioned terminal, and may include the following steps.

At Step 200, a user sends a screen capturing operation instruction.

At Step 201, when the screen capturing operation instruction is detected, a current display page is captured, and a screenshot corresponding to the current display page is generated.

In an embodiment, if reading a favorite content during content browsing through the terminal, the user may reserve the favorite content in a screen capturing manner. For example, the screen capturing operation instruction may be sent to the terminal through a fast operation key or instruction, and after receiving the screen capturing operation instruction, the terminal captures the current display page, and generates the screenshot corresponding to the current display page to the user. The user may perform storage, sharing or another operation on the screenshot. In an embodiment, the generated screenshot may be stored in a local picture base of the terminal as a default.

At Step 202, a preview picture corresponding to the screenshot is generated, and the preview picture is displayed at a preset position of a display screen.

In the embodiment of the present disclosure, the step that the preview picture is displayed at the preset position of the display screen includes that:
the preview picture is displayed at the preset position of the display screen during a preset time; and
the preview picture is not displayed any longer after the preset time expires if no operation is performed on the preview picture within the preset time.

In an embodiment, the preset time may be set in an operating system according to a condition, for example, 2s or 3s, which is not limited in the embodiment of the present disclosure.

Optionally, the step that the preview picture is displayed at the preset position of the display screen may include, but not limited to, that:
the preview picture is displayed in a preset area in a right upper corner of the display screen; or, the preview picture is displayed in a preset area in a left upper corner of the display screen.

In such a manner, the terminal displays the preview picture of the screenshot at the preset position of the screen of the terminal to the user, and the user may see the screenshot on the current display screen without switching to the local picture base, so that the user may subsequently perform some other operations such as marking, sharing and editing on the screenshot conveniently.

In an embodiment, the preview picture corresponding to the screenshot may also be called a thumbnail corresponding to the screenshot, and either the preview picture or the thumbnail is an ingress for rapidly displaying the screenshot to the user to enable the user to rapidly view the screenshot through the preview picture or the thumbnail without switching to the local picture base for viewing. In the embodiment, the preview picture is collectively called.

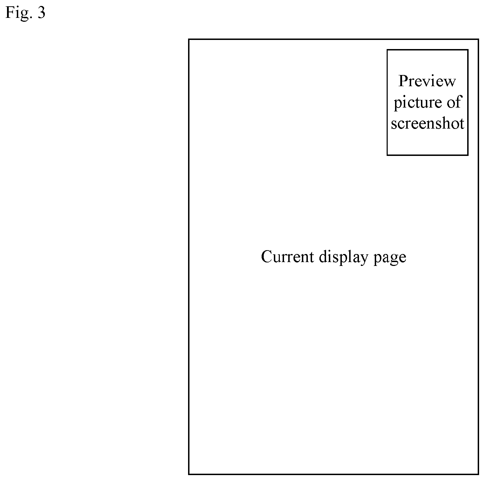

Referring to Fig. 3, Fig. 3 is a schematic diagram illustrating previewing of a screenshot on a display screen of a terminal. The preview picture of the screenshot is displayed in the preset area in the right upper corner of the display screen of the terminal. A size of the preset area is consistent with a display size of the preview picture.

At Step 203: it is detected whether the user switches to a preset page on which a preset application is displayed or not.

In an embodiment, the preset application may include, but not limited to: a communication application, or a text edition application.

The text edition application may be office application software such as Word and PPT, and text edition software such as a memo and a note; and the communication application may be a communication tool such as an instant messaging application, short message service, a telephone application or SNS application software.

In an embodiment, when the preset application is a communication application, the preset page may include: a contact session page in the communication application, an address book page of the communication application, or a call record interface of the communication application.

In an embodiment, when the preset application is a text edition application, the preset page may be a text edition page.

In an embodiment, the user may switch to the preset page on which the preset application is displayed through an application switching operation instruction, and when a display page switching operation instruction of the user is detected, the display page on which an application specified by the user to be displayed is displayed is switched to.

At Step 204, when the preset page on which the preset application is displayed currently runs, it is detected whether the user performs a dragging operation on the displayed preview picture or not.

At Step 205, if it is detected that the user performs the dragging operation on the preview picture, the preview picture is moved and displayed according to the dragging operation.

At Step 206, if it is detected that the preview picture is moved to a target position of the preset page, a sharing operation is performed on the screenshot.

In an embodiment, when the preset page is the contact session page in the communication application, the address book page of the communication application or the call record interface of the communication application, the step that the sharing operation is performed on the screenshot may include that: the screenshot is sent to a contact in the communication application to implement sharing of the screenshot. Here, the operation that the screenshot is sent to the contact in the communication application refers to that an original of the screenshot is sent to the contact in the communication application.

In an embodiment, the target position of the preset page may be: an area of a message input box of the contact session page, a position of a certain contact item in the address book page or a position of a certain call record item in the call record interface. For example, if it is detected that the preview picture is dragged and moved into the message input box of the contact session page in the communication application, the screenshot is sent to a contact of a current session.

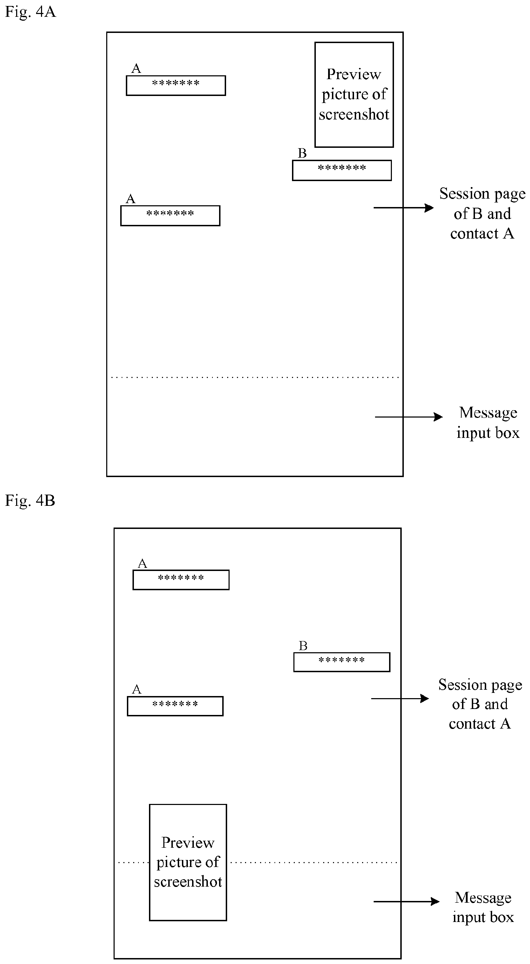

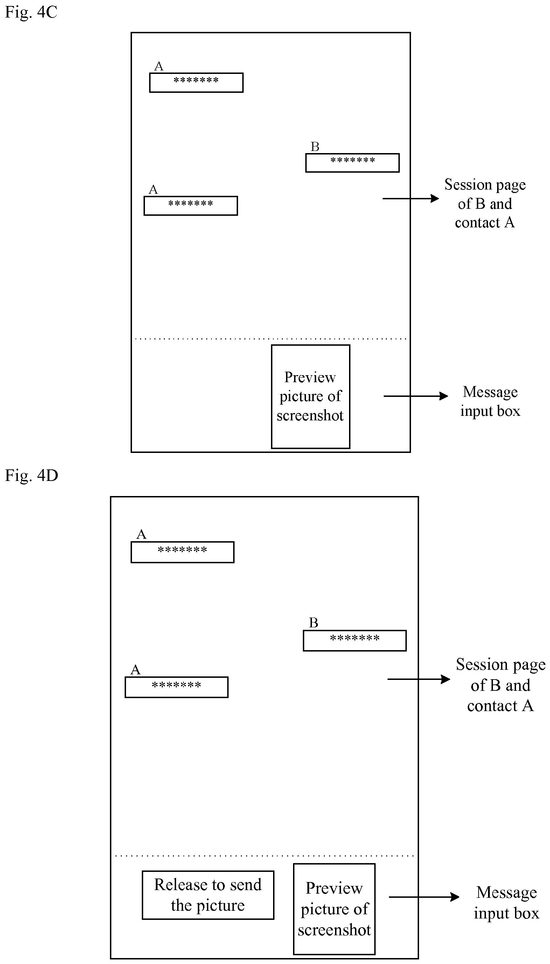

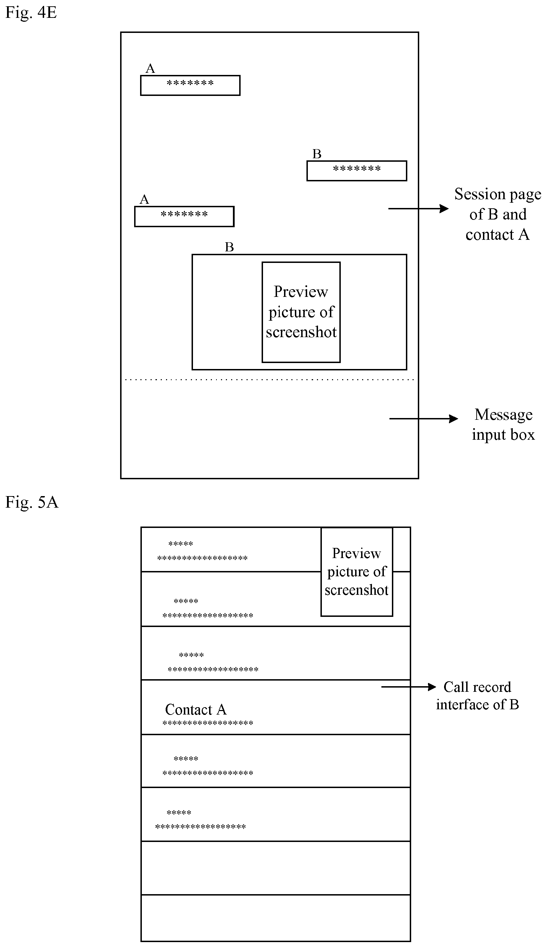

Figs. 4A to 4E are schematic diagrams illustrating an implementation process of sharing a screenshot in a contact session page according to an exemplary embodiment. Fig. 4A is a schematic diagram illustrating a contact session page in an instant messaging application. The preview picture is displayed in the right upper corner of the display screen of the terminal; after the dragging operation of the user on the preview picture is detected, the preview picture is moved on a current display interface according to the dragging operation, and this process refers to Fig. 4B. When the preview picture is dragged into the area of the message input box of the session page, if it is detected that the user releases the preview picture, the preview picture is input into the message input box, referring to Fig. 4C. If a sending request of the user for the preview picture in the message input box is detected, the preview picture is sent to a contact of a current session, referring to Fig. 4E, to implement an operation of sharing the screenshot to the contact. In an embodiment, before the screenshot is shared to the contact, the user may be prompted to perform a picture sharing operation. As shown in Fig. 4D, the user may be prompted of words "release to send the picture" to prompt the user to release the preview picture to implement a sending operation on the screenshot.

If it is detected that the preview picture is dragged and moved to a certain contact item in the address book page, the screenshot is sent to the contact; and if it is detected that the preview picture is dragged and moved to a position of a certain call record item in call records, the screenshot is sent to a contact corresponding to the call record.

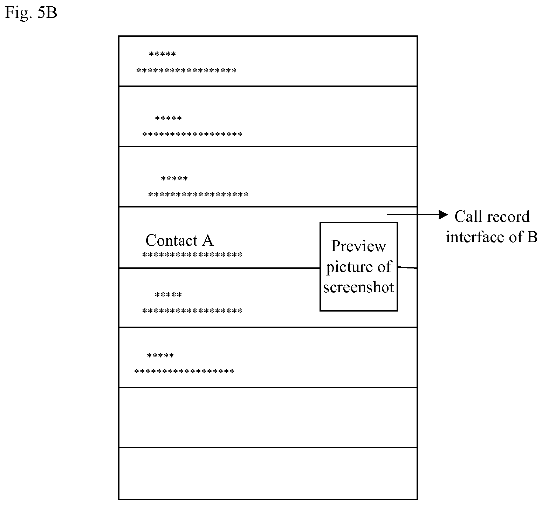

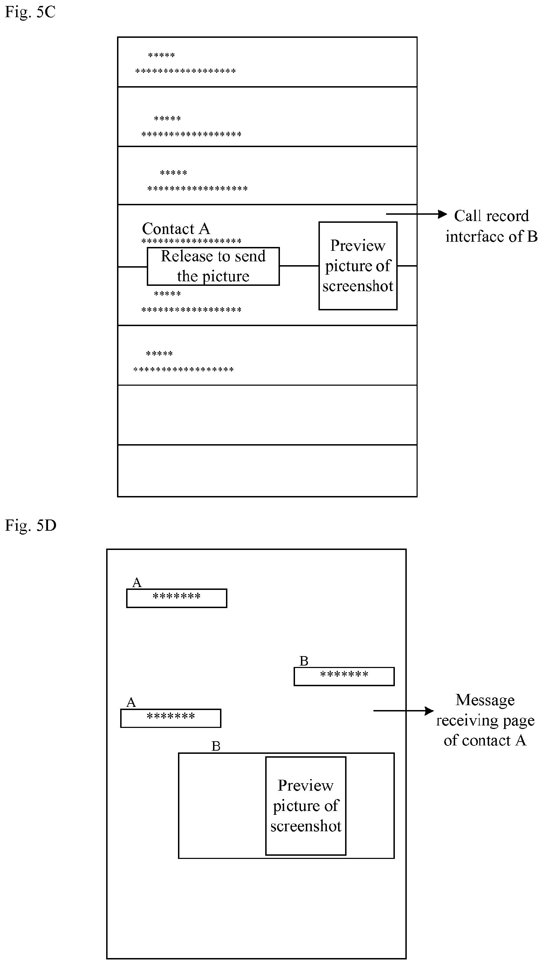

Figs. 5A to 5D are schematic diagrams illustrating an implementation process of sharing a screenshot in a call record according to an exemplary embodiment. Fig. 5A is a schematic diagram illustrating a call record in an instant messaging application. The preview picture of the screenshot is displayed in the right upper corner of the display screen of the terminal; after the dragging operation of the user on the preview picture is detected, the preview picture is moved on the current display interface according to the dragging operation, and this process refers to Fig. 5B. When the preview picture is dragged to a certain contact item in the address book page, if it is detected that the user releases the preview picture, the screenshot is sent to the contact corresponding to the call record, referring to Fig. 5D, to implement an operation of sharing the screenshot to the contact. In an embodiment, before the screenshot is shared to the contact, the user may be prompted to perform a picture sharing operation, as shown in Fig. 5C, the user may be prompted of words "release to send the picture" to prompt the user to release the preview picture to implement a sending operation on the screenshot.

In another embodiment, when the screenshot is sent to the contact in the communication application to implement sharing of the screenshot, the original of the screenshot may not be sent to the contact in the communication application, and only the preview picture corresponding to the screenshot is shared to the contact, so that sharing of the screenshot may still be implemented only with a definition of the screenshot received by the contact being relatively lower, but a data volume during data communication may be reduced, and a sending speed during sharing of the screenshot may be increased under the condition that a network condition is not so ideal.

When the preset application is another communication application, a manner for sending the screenshot to a contact in the communication application is similar to the abovementioned manner for the session page or the address book page, and will not be elaborated herein.

In an embodiment, when the preset page is a text edition page, the step that the sharing operation is performed on the screenshot may include that: the screenshot is inserted into a text edition page to implement sharing of the screenshot.

In an embodiment, when the text edition page is a memo edition page, if it is detected that the preview picture is moved to a certain line of the memo edition page, the screenshot is inserted into the text line of the memo edition page. Alternatively, when the text edition page is office edition software, if it is detected that the preview picture is moved to a certain position of the text edition page, the screenshot is inserted to the position.

In an embodiment, the original of the screenshot may be inserted into a certain position of the edition page. The preview picture corresponding to the screenshot may also be inserted into a certain position of the edition page. Since a size of the preview picture is relatively smaller, a space occupied by an edited text may be reduced.

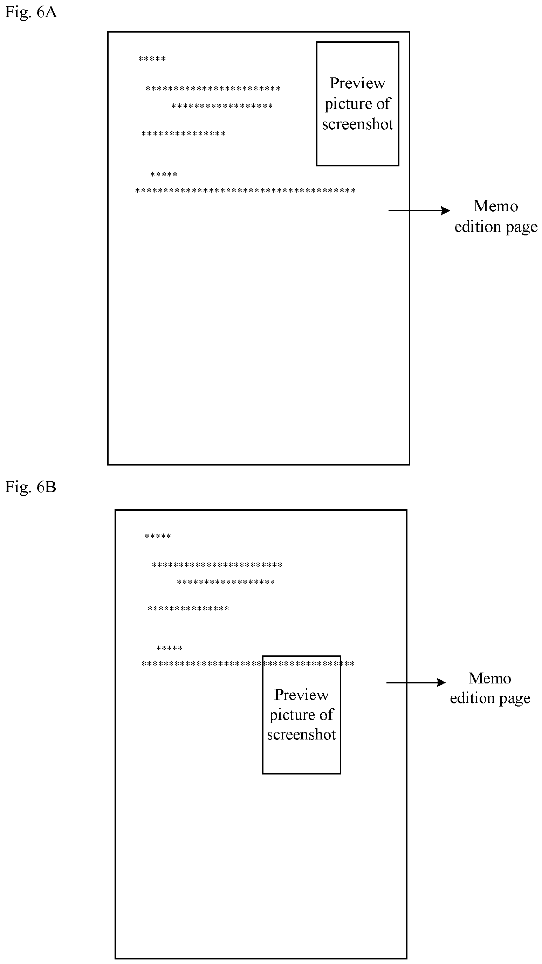

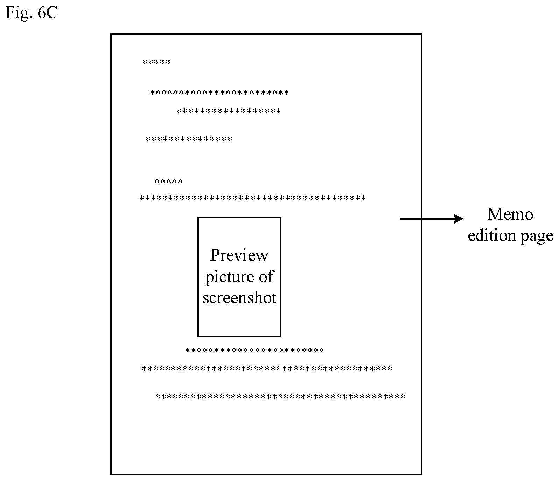

Figs. 6A to 6C are schematic diagrams illustrating an implementation process of sharing a screenshot in a memo according to an exemplary embodiment. Fig. 6A is a schematic diagram illustrating a memo edition page. The preview picture of the screenshot is displayed in the right upper corner of the display screen of the terminal; after the dragging operation of the user on the preview picture is detected, the preview picture is moved on the current display interface according to the dragging operation, and this process refers to Fig. 6B. When the preview picture is dragged to a certain line of the memo edition page, if it is detected that the user releases the preview picture, the screenshot is inserted into the line of the memo edition page, referring to Fig. 6C, to implement sharing of the screenshot.

When the preset application is another text edition application, a manner for inserting the screenshot into a text edition page is similar to the abovementioned process of inserting the screenshot to the memo edition page, and will not be elaborated herein.

In an embodiment, the step that the sharing operation is performed on the screenshot may include that: it is detected whether a sharing triggering instruction for the screenshot is received or not, and if the triggering operation for the sharing operation on the screenshot is detected (for example, the dragging operation on the preview picture is detected to be released), the sharing operation is performed on the screenshot, for example, the screenshot is sent to a certain contact, or the screenshot is inserted into a certain position of the text edition page.

In an embodiment, before the step that the sharing operation is performed on the screenshot, the method may further include that: the user is prompted whether to share the screenshot or not to prevent a false touch operation.

From the above, according to the technical solutions, after the screenshot is generated and previewed, it is detected whether the user switches to the preset page on which the preset application is displayed or not; when the preset page on which the preset application is displayed currently runs, it is detected whether the user performs the dragging operation on the displayed preview picture or not, and if it is detected that the user performs the dragging operation on the preview picture, the preview picture is moved and displayed according to the dragging operation; and if it is detected that the preview picture is moved to the target position of the preset page, the sharing operation is performed on the screenshot. By the dragging operation on the previewed scrccnshot, the sharing operation on the screenshot may be rapidly implemented, thereby facilitating the operation of the user, and user experiences.

The below is a device embodiment of the present disclosure, which may be configured to execute the method embodiment of the present disclosure. Details undisclosed in the device embodiment of the present disclosure refer to the method embodiment of the present disclosure.

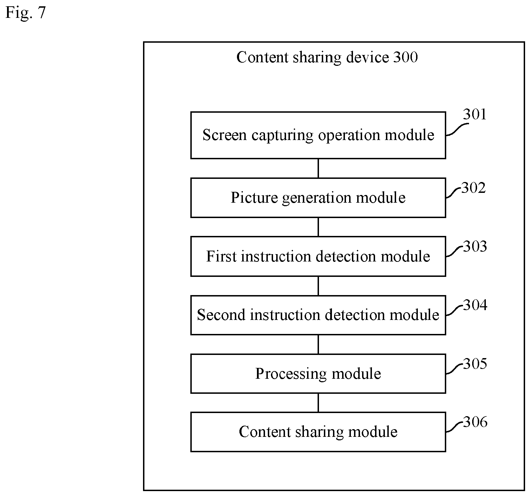

Fig. 7 is a block diagram of a content sharing device 300 according to an exemplary embodiment. The content sharing device 300 may be implemented into part or all of a terminal by virtue of software, hardware or a combination thereof, and the terminal may be electronic display equipment with a touch display screen, such as a mobile phone or a tablet computer. The content sharing device 300 may include:
a screen capturing operation module 301, configured to, when a screen capturing operation instruction is detected, capture a current display page, and generate a screenshot corresponding to the current display page;
a picture generation module 302, configured to generate a preview picture corresponding to the screenshot, and display the preview picture at a preset position of a display screen;
a first instruction detection module 303, configured to detect whether a user switches to a preset page on which a preset application is displayed or not;
a second instruction detection module 304, configured to, when the preset page on which the preset application is displayed currently runs, detect whether the user performs a dragging operation on the displayed preview picture or not;
a processing module 305, configured to, if it is detected that the user performs the dragging operation on the preview picture, move and display the preview picture according to the dragging operation; and
a content sharing module 306, configured to, if it is detected that the preview picture is moved to a target position of the preset page, perform a sharing operation on the screenshot.

In an embodiment, the picture generation module 302 is configured to display the preview picture at the preset position of the display screen during a preset time, and not display the preview picture any longer after the preset time expires if no operation is performed on the preview picture within the preset time.

In another embodiment, the picture generation module 302 may be configured to display the preview picture in a preset area in a right upper corner of the display screen; or, display the preview picture in a preset area in a left upper corner of the display screen.

In an embodiment, the preset application includes: a communication application, or a text edition application.

In an embodiment, when the preset application is a communication application, the preset page includes: a contact session page in the communication application, an address book page of the communication application, or a call record interface of the communication application.

In an embodiment, the content sharing module 306 may be configured to send the screenshot to a contact in the communication application to implement sharing of the screenshot.

In an embodiment, when the preset application is a text edition application, the preset page is a text edition page.

In an embodiment, the content sharing module 306 may be configured to insert the screenshot into a text edition page to implement sharing of the screenshot.

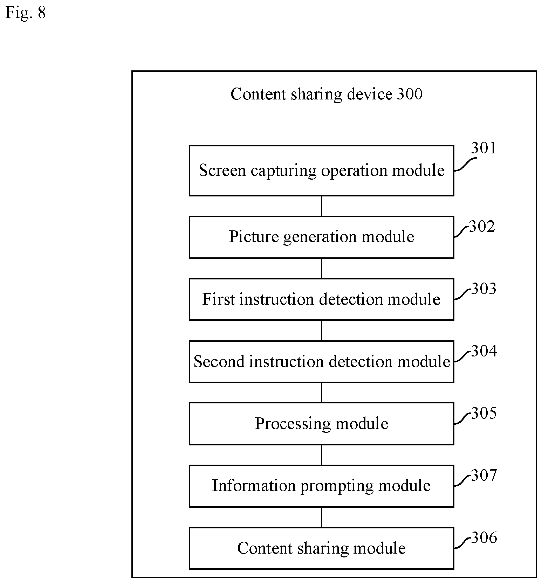

In an embodiment, referring to Fig. 8, the device shown in Fig. 7 may further include:
an information prompting module 307, configured to prompt the user whether to share the screenshot or not.

From the above, according to the technical solutions, after the screenshot is generated and previewed, it is detected whether the user switches to the preset page on which the preset application is displayed or not; when the preset page on which the preset application is displayed currently runs, it is detected whether the user performs the dragging operation on the displayed preview picture or not, and if it is detected that the user performs the dragging operation on the preview picture, the preview picture is moved and displayed according to the dragging operation; and if it is detected that the preview picture is moved to the target position of the preset page, the sharing operation is performed on the screenshot. By the dragging operation on the previewed screenshot, the sharing operation on the screenshot may be rapidly implemented, thereby facilitating the operation of the user, and improving user experiences.

With respect to the devices in the above embodiments, the specific manners for performing operations for individual modules therein have been described in detail in the embodiments regarding the methods, which will not be elaborated herein.

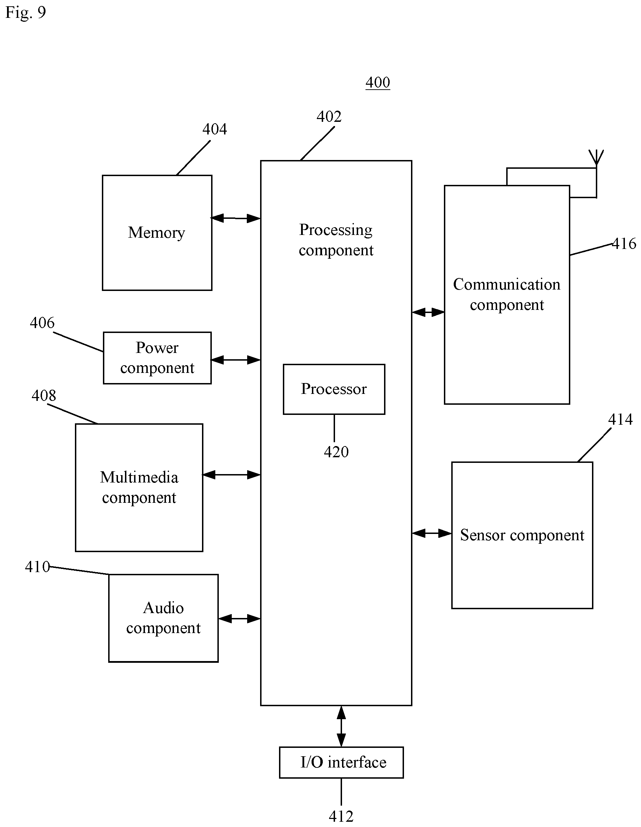

Fig. 9 is a block diagram of a content sharing device 400 according to an exemplary embodiment. For example, the device 400 may be electronic display equipment with a touch display screen, such as a mobile phone or a tablet computer.

Referring to Fig. 9, the device 400 may include one or more of the following components: a processing component 402, a memory 404, a power component 406, a multimedia component 408, an audio component 410, an Input/Output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to perform all or part of the steps in the abovementioned content sharing method. Moreover, the processing component 402 may include one or more modules which facilitate interaction between the processing component 402 and the other components. For instance, the processing component 402 may include a multimedia module to facilitate interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 406 provides power for various components of the device 400. The power component 406 may include a power management system, one or more power supplies, and other components associated with the generation, management and distribution of power for the device 400.

The multimedia component 408 includes a screen providing an output interface between the device 400 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 408 includes a front camera and/or a rear camera. The front camera and/or the rear camera may receive external multimedia data when the device 400 is in an operation mode, such as a photographing mode or a video mode. Each of the front camera and the rear camera may be a fixed optical lens system or have focusing and optical zooming capabilities.

The audio component 410 is configured to output and/or input an audio signal. For example, the audio component 410 includes a Microphone (MIC), and the MIC is configured to receive an external audio signal when the device 400 is in the operation mode, such as a call mode, a recording mode and a voice recognition mode. The received audio signal may be further stored in the memory 404 or sent through the communication component 416. In some embodiments, the audio component 410 further includes a speaker configured to output the audio signal.

The I/O interface 412 provides an interface between the processing component 402 and a peripheral interface module, and the peripheral interface module may be a keyboard, a click wheel, a button and the like. The button may include, but not limited to: a home button, a volume button, a starting button and a locking button.

The sensor component 414 includes one or more sensors configured to provide status assessment in various aspects for the device 400. For instance, the sensor component 414 may detect an on/off status of the device 400 and relative positioning of components, such as a display and small keyboard of the device 400, and the sensor component 414 may further detect a change in a position of the device 400 or a component of the device 400, presence or absence of contact between the user and the device 400, orientation or acceleration/deceleration of the device 400 and a change in temperature of the device 400. The sensor component 414 may include a proximity sensor configured to detect presence of an object nearby without any physical contact. The sensor component 414 may also include a light sensor, such as a Complementary Metal Oxide Semiconductor (CMOS) or Charge Coupled Device (CCD) image sensor, configured for use in an imaging application. In some embodiments, the sensor component 414 may also include an acceleration sensor, a gyroscope sensor, a magnetic sensor, a pressure sensor or a temperature sensor.

The communication component 416 is configured to facilitate wired or wireless communication between the device 400 and another device. The device 400 may access a communication-standard-based wireless network, such as a Wireless Fidelity (Wi-Fi) network, a 2nd-Generation (2G) or 3rd-Generation (3G) network or a combination thereof. In an exemplary embodiment, the communication component 416 receives a broadcast signal or broadcast associated information from an external broadcast management system through a broadcast channel. In an exemplary embodiment, the communication component 416 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 400 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioneddisplay interface switching method.

In an exemplary embodiment, there is also provided a non-transitory computer-readable storage medium including instructions, such as the memory 404 including instructions, and the instructions may be executed by the processor 420 of the device 400 to implement the abovementioned content sharing method. For example, the non-transitory computer-readable storage medium may be a ROM, a Radom Access Memory (RAM), a Compact Disc Read-Only Memory (CD-ROM), a magnetic tape, a floppy disc, an optical data storage device and the like.

According to a non-transitory computer-readable storage medium, when the instructions in the storage medium are executed by the processor of the device 400, the device 400 may execute the abovementioned content sharing method.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A content sharing method, **characterized in that**, the method comprises:
when a screen capturing operation instruction is detected, capturing (101, 201) a current display page, and generating a screenshot corresponding to the current display page;
generating (102, 202) a preview picture corresponding to the screenshot, and displaying (102, 202) the preview picture at a preset position of a display screen during a preset time;
detecting (103, 203) whether a user switches to a preset page on which a preset application is displayed or not;
detecting (104, 204) whether the user performs a dragging operation on the displayed preview picture or not when the preset page on which the preset application is displayed currently runs;
if it is detected that the user performs the dragging operation on the preview picture, moving and displaying (105, 205) the preview picture according to the dragging operation; and
if it is detected that the preview picture is moved to a target position of the preset page, detecting whether a sharing triggering instruction for the screenshot is received, and when the sharing triggering instruction is detected, performing (106, 206) a sharing operation on the screenshot.

2. The method according to claim 1, wherein the method further comprises:
not displaying the preview picture any longer after the preset time expires if no operation is performed on the preview picture within the preset time.

3. The method according to claim 1 or 2, wherein displaying (102, 202) the preview picture at the preset position of the display screen during the preset time comprises:
displaying the preview picture in a preset area in a right upper corner of the display screen during the preset time; or, displaying the preview picture in a preset area in a left upper corner of the display screen during the preset time.

4. The method according to any one of the preceding claims, wherein the preset application comprises: a communication application, or a text edition application.

5. The method according to claim 4, wherein, when the preset application is a communication application, the preset page comprises: a contact session page in the communication application, an address book page of the communication application, or a call record interface of the communication application, wherein performing (106, 206) the sharing operation on the screenshot comprises: sending the screenshot to a contact in the communication application to implement sharing of the screenshot.

6. The method according to claim 4, wherein when the preset application is a text edition application, the preset page is a text edition page, and
performing (106, 206) the sharing operation on the screenshot comprises:
inserting the screenshot into a text edition page to implement sharing of the screenshot.

7. The method according to any one of claims 1-6, before performing (106, 206) the sharing operation on the screenshot, further comprising: prompting the user whether to share the screenshot or not.

8. A content sharing device (300), **characterized in that**, the device comprises:
a screen capturing operation module (301), configured to, when a screen capturing operation instruction is detected, capture a current display page, and generate a screenshot corresponding to the current display page;
a picture generation module (302), configured to generate a preview picture corresponding to the screenshot, and display the preview picture at a preset position of a display screen during a preset time;
a first instruction detection module (303), configured to detect whether a user switches to a preset page on which a preset application is displayed or not;
a second instruction detection module (304), configured to, when the preset page on which the preset application is displayed currently runs, detect whether the user performs a dragging operation on the displayed preview picture or not;
a processing module (305), configured to, if it is detected that the user performs the dragging operation on the preview picture, move and display the preview picture according to the dragging operation; and
a content sharing module (306), configured to, if it is detected that the preview picture is moved to a target position of the preset page, detect whether a sharing triggering instruction for the screenshot is received, and when the sharing triggering instruction is detected, perform a sharing operation on the screenshot.

9. The device according to claim 8, wherein the picture generation module (302) is configured to not display the preview picture any longer after the preset time expires if no operation is performed on the preview picture within the preset time.

10. The device according to claim 8 or 9, wherein the picture generation module (302) is configured to display the preview picture in a preset area in a right upper corner of the display screen; or, display the preview picture in a preset area in a left upper corner of the display screen.

11. The device according to any one of claims 8-10, wherein the preset application comprises: a communication application, or a text edition application.

12. The device according to claim 11, wherein, when the preset application is a communication application, the preset page comprises: a contact session page in the communication application, an address book page of the communication application, or a call record interface of the communication application, wherein the content sharing module (306) is configured to send the screenshot to a contact in the communication application to implement sharing of the screenshot..

13. The device according to claim 11, wherein when the preset application is a text edition application, the preset page is a text edition page, and
the content sharing module (306) is configured to insert the screenshot into a text edition page to implement sharing of the screenshot.

14. The device according to any one of claims 8-13, further comprising:
an information prompting module (307), configured to prompt the user whether to share the screenshot or not.

## Patentansprüche

1. Verfahren zur gemeinsamen Nutzung bzw. Freigabe von Inhalten, **dadurch gekennzeichnet, dass** das Verfahren umfasst:
Aufnehmen (101, 201) einer aktuellen Anzeigeseite und Erzeugen eines Bildschirmfotos, das der aktuellen Anzeigeseite entspricht, wenn eine Bildschirmaufnahmevorgangsanweisung erfasst bzw. detektiert wird;
Erzeugen (102, 202) eines Vorschaubildes, das dem Screenshot entspricht, und Anzeigen (102, 202) des Vorschaubildes an einer voreingestellten Position eines Anzeigebildschirms während einer voreingestellten Zeit;
Erfassen (103, 203), ob ein Benutzer zu einer voreingestellten Seite wechselt, auf der eine voreingestellte Anwendung angezeigt wird, oder nicht;
Erfassen (104, 204), ob der Benutzer einen Zieh- bzw. Verschiebevorgang an dem angezeigten Vorschaubild durchführt oder nicht, wenn die voreingestellte Seite, auf der die voreingestellte Anwendung angezeigt wird, gerade läuft;
Bewegen und Anzeigen (105, 205) des Vorschaubildes gemäß dem Verschiebevorgang, wenn erfasst wird, dass der Benutzer den Verschiebevorgang auf dem Vorschaubild durchführt; und
Erfassen, ob eine Freigabeauslöseanweisung für den Screenshot empfangen wird, wenn festgestellt wird, dass das Vorschaubild an eine Zielposition der voreingestellten Seite bewegt wird, und Ausführen (106, 206) eines Freigabevorgangs für den Screenshot, wenn die Freigabeauslöseanweisung erfasst wird.

2. Verfahren nach Anspruch 1, wobei das Verfahren ferner umfasst:
Nicht mehr Anzeigen des Vorschaubildes, nachdem die voreingestellte Zeit abgelaufen ist, wenn an dem Vorschaubild innerhalb der voreingestellten Zeit kein Vorgang durchgeführt wird.

3. Verfahren nach Anspruch 1 oder 2, wobei das Anzeigen (102, 202) des Vorschaubildes an der voreingestellten Position des Anzeigebildschirms während der voreingestellten Zeit umfasst:
Anzeigen des Vorschaubildes in einem voreingestellten Bereich in einer rechten oberen Ecke des Anzeigebildschirms während der voreingestellten Zeit; oder
Anzeigen des Vorschaubildes in einem voreingestellten Bereich in einer linken oberen Ecke des Anzeigebildschirms während der voreingestellten Zeit.

4. Verfahren nach einem der vorstehenden Ansprüche, wobei die voreingestellte Anwendung umfasst: eine Kommunikationsanwendung oder eine Textausgabeanwendung.

5. Verfahren nach Anspruch 4, wobei, wenn die voreingestellte Anwendung eine Kommunikationsanwendung ist, die voreingestellte Seite umfasst: eine Kontaktsitzungsseite in der Kommunikationsanwendung, eine Adressbuchseite der Kommunikationsanwendung oder eine Anrufaufzeichnungsschnittstelle der Kommunikationsanwendung, wobei das Durchführen (106, 206) des Freigabevorgangs auf dem Screenshot umfasst: Senden des Screenshots an einen Kontakt in der Kommunikationsanwendung, um die Freigabe des Screenshots zu implementieren.

6. Verfahren nach Anspruch 4, wobei, wenn die voreingestellte Anwendung eine Textausgabeanwendung ist, die voreingestellte Seite eine Textausgabeseite ist, und
Durchführen (106, 206) des Freigabevorgangs auf dem Screenshot umfasst:
Einfügen des Screenshots in eine Textausgabeseite, um die Freigabe des Screenshots zu implementieren.

7. Verfahren nach einem der Ansprüche 1-6, wobei das Verfahren vor dem Durchführen (106, 206) des Freigabevorgangs auf dem Screenshot ferner umfasst: Fragen des Benutzers, ob der Screenshot freigegeben werden soll oder nicht.

8. Vorrichtung zur Freigabe von Inhalten (300), **dadurch gekennzeichnet, dass** die Vorrichtung umfasst:
ein Bildschirmaufnahmevorgangsmodul (301), das so eingerichtet ist, dass es, wenn eine Bildschirmaufnahmevorgangsanweisung erfasst wird, eine aktuelle Anzeigeseite aufnimmt und einen Screenshot, der der aktuellen Anzeigeseite entspricht, erzeugt;
ein Bilderzeugungsmodul (302), das so eingerichtet ist, dass es ein Vorschaubild, das dem Screenshot entspricht, erzeugt und das Vorschaubild an einer voreingestellten Position eines Anzeigebildschirms während einer voreingestellten Zeit anzeigt;
ein erstes Anweisungserfassungsmodul (303), das so eingerichtet ist, dass es erfasst, ob ein Benutzer zu einer voreingestellten Seite, auf der eine voreingestellte Anwendung angezeigt wird, wechselt oder nicht;
ein zweites Anweisungserfassungsmodul (304), das so eingerichtet ist, dass es, wenn die voreingestellte Seite, auf der die voreingestellte Anwendung angezeigt wird, gerade läuft, erfasst, ob der Benutzer einen Verschiebevorgang auf dem angezeigten Vorschaubild ausführt oder nicht;
ein Verarbeitungsmodul (305), das so eingerichtet ist, dass es, wenn erfasst wird, dass der Benutzer den Verschiebevorgang an dem Vorschaubild durchführt, das Vorschaubild entsprechend dem Verschiebevorgang bewegt und anzeigt; und
ein Inhaltsfreigabemodul (306), das so eingerichtet ist, dass es, wenn erfasst wird, dass das Vorschaubild an eine Zielposition der voreingestellten Seite bewegt wird, erfasst, ob eine Freigabeauslöseanweisung für den Screenshot empfangen wird, und wenn die Freigabeauslöseanweisung erfasst wird, einen Freigabevorgang an dem Screenshot durchführt.

9. Vorrichtung nach Anspruch 8, wobei das Bilderzeugungsmodul (302) so eingerichtet ist, dass es nach Ablauf der voreingestellten Zeit das Vorschaubild nicht mehr anzeigt, wenn innerhalb der voreingestellten Zeit kein Vorgang an dem Vorschaubild durchgeführt wird.

10. Vorrichtung nach Anspruch 8 oder 9, wobei das Bilderzeugungsmodul (302) so eingerichtet ist, dass es das Vorschaubild in einem voreingestellten Bereich in einer rechten oberen Ecke des Anzeigebildschirms anzeigt; oder dass es das Vorschaubild in einem voreingestellten Bereich in einer linken oberen Ecke des Anzeigebildschirms anzeigt.

11. Vorrichtung nach einem der Ansprüche 8-10, wobei die voreingestellte Anwendung umfasst: eine Kommunikationsanwendung oder eine Textausgabeanwendung.

12. Vorrichtung nach Anspruch 11, wobei, wenn die voreingestellte Anwendung eine Kommunikationsanwendung ist, die voreingestellte Seite umfasst: eine Kontaktsitzungsseite in der Kommunikationsanwendung, eine Adressbuchseite der Kommunikationsanwendung oder eine Anrufaufzeichnungsschnittstelle der Kommunikationsanwendung,
wobei das Inhaltsfreigabemodul (306) so eingerichtet ist, dass es den Screenshot an einen Kontakt in der Kommunikationsanwendung sendet, um die Freigabe des Screenshots zu implementieren.

13. Vorrichtung nach Anspruch 11, wobei, wenn die voreingestellte Anwendung eine Textausgabeanwendung ist, die voreingestellte Seite eine Textausgabeseite ist, und
das Inhaltsfreigabemodul (306) eingerichtet ist, den Screenshot in eine Textausgabeseite einzufügen, um die Freigabe des Screenshots zu implementieren.

14. Vorrichtung nach einem der Ansprüche 8-13, ferner umfassend:
ein Informationsaufforderungsmodul (307), das so eingerichtet ist, dass es den Benutzer fragt, ob der Screenshot freigegeben werden soll oder nicht.

## Revendications

1. Procédé de partage de contenu, **caractérisé en ce que** le procédé comprend :
lorsqu'une instruction d'opération de capture d'écran est détectée, capturer (101, 201) une page d'affichage actuelle, et générer une capture d'écran correspondant à la page d'affichage actuelle ;
générer (102, 202) une image de prévisualisation correspondant à la capture d'écran, et afficher (102, 202) l'image de prévisualisation à une position prédéfinie d'un écran d'affichage pendant un temps prédéfini ;
détecter (103, 203) si un utilisateur passe à une page prédéfinie sur laquelle une application prédéfinie est affichée ou non ;
détecter (104, 204) si l'utilisateur exécute une opération de glisser-déposer sur l'image de prévisualisation affichée ou non lorsque la page prédéfinie sur laquelle l'application prédéfinie est affichée est en cours d'exécution ;
s'il est détecté que l'utilisateur exécute l'opération de glissement sur l'image de prévisualisation, déplacer et afficher (105, 205) l'image de prévisualisation en fonction de l'opération de glissement ; et
s'il est détecté que l'image de prévisualisation est déplacée vers une position cible de la page prédéfinie, détecter si une instruction de déclenchement de partage pour la capture d'écran est reçue, et lorsque l'instruction de déclenchement de partage est détectée, exécuter (106, 206) une opération de partage sur la capture d'écran.

2. Procédé selon la revendication 1, dans lequel le procédé comprend en outre :
ne plus afficher l'image de prévisualisation après l'expiration du temps prédéfini si aucune opération n'est exécutée sur l'image de prévisualisation dans le temps prédéfini.

3. Procédé selon la revendication 1 ou 2, dans lequel l'affichage (102, 202) de l'image de prévisualisation à la position prédéfinie de l'écran d'affichage pendant le temps prédéfini comprend :
afficher l'image de prévisualisation dans une zone prédéfinie dans un coin supérieur droit de l'écran d'affichage pendant le temps prédéfini ; ou, afficher l'image de prévisualisation dans une zone prédéfinie dans un coin supérieur gauche de l'écran d'affichage pendant le temps prédéfini.

4. Procédé selon l'une des revendications précédentes, dans lequel l'application prédéfinie comprend : une application de communication, ou une application d'édition de texte.

5. Procédé selon la revendication 4, dans lequel, lorsque l'application prédéfinie est une application de communication, la page prédéfinie comprend : une page de session de contact dans l'application de communication, une page de carnet d'adresses de l'application de communication, ou une interface d'enregistrement d'appel de l'application de communication, dans lequel l'exécution (106, 206) de l'opération de partage sur la capture d'écran comprend : envoyer la capture d'écran à un contact dans l'application de communication pour mettre en oeuvre le partage de la capture d'écran.

6. Procédé selon la revendication 4, dans lequel lorsque l'application prédéfinie est une application d'édition de texte, la page prédéfinie est une page d'édition de texte, et
exécuter (106, 206) l'opération de partage sur la capture d'écran comprend :
insérer la capture d'écran dans une page d'édition de texte pour mettre en œuvre le partage de la capture d'écran.

7. Procédé selon l'une des revendications 1 à 6, avant d'exécuter (106, 206) l'opération de partage sur la capture d'écran, comprenant en outre : inviter l'utilisateur à partager ou non la capture d'écran.

8. Dispositif de partage de contenu (300), **caractérisé en ce que**, le dispositif comprend :
un module d'opération de capture d'écran (301), configuré pour, lorsqu'une instruction d'opération de capture d'écran est détectée, capturer une page d'affichage actuelle, et générer une capture d'écran correspondant à la page d'affichage actuelle
un module de génération d'image (302), configuré pour générer une image de prévisualisation correspondant à la capture d'écran, et afficher l'image de prévisualisation à une position prédéfinie d'un écran d'affichage pendant un temps prédéfini ;
un premier module de détection d'instructions (303), configuré pour détecter si un utilisateur passe à une page prédéfinie sur laquelle une application prédéfinie est affichée ou non ;
un deuxième module de détection d'instructions (304), configuré pour, lorsque la page prédéfinie sur laquelle l'application prédéfinie est affichée est en cours d'exécution, détecter si l'utilisateur exécute ou non une opération de glissement sur l'image de prévisualisation affichée ;
un module de traitement (305), configuré pour, s'il est détecté que l'utilisateur exécute l'opération de glissement sur l'image de prévisualisation, déplacer et afficher l'image de prévisualisation en fonction de l'opération de glissement ; et un module de partage de contenu (306), configuré pour, s'il est détecté que l'image de prévisualisation est déplacée vers une position cible de la page prédéfinie, détecter si une instruction de déclenchement de partage pour la capture d'écran est reçue, et lorsque l'instruction de déclenchement de partage est détectée, exécuter une opération de partage sur la capture d'écran.

9. Dispositif selon la revendication 8, dans lequel le module de génération d'image (302) est configuré pour ne plus afficher l'image de prévisualisation après l'expiration du temps prédéfini si aucune opération n'est exécutée sur l'image de prévisualisation dans le temps prédéfini.

10. Dispositif selon la revendication 8 ou 9, dans lequel le module de génération d'image (302) est configuré pour afficher l'image de prévisualisation dans une zone prédéfinie dans un coin supérieur droit de l'écran d'affichage ; ou, afficher l'image de prévisualisation dans une zone prédéfinie dans un coin supérieur gauche de l'écran d'affichage.

11. Dispositif selon l'une quelconque des revendications 8 à 10, dans lequel l'application prédéfinie comprend : une application de communication, ou une application d'édition de texte.

12. Dispositif selon la revendication 11, dans lequel, lorsque l'application prédéfinie est une application de communication, la page prédéfinie comprend : une page de session de contact dans l'application de communication, une page de carnet d'adresses de l'application de communication, ou une interface d'enregistrement d'appel de l'application de communication,
dans lequel le module de partage de contenu (306) est configuré pour envoyer la capture d'écran à un contact dans l'application de communication pour mettre en œuvrele partage de la capture d'écran.

13. Dispositif selon la revendication 11, dans lequel lorsque l'application prédéfinie est une application d'édition de texte, la page prédéfinie est une page d'édition de texte, et
le module de partage de contenu (306) est configuré pour insérer la capture d'écran dans une page d'édition de texte pour mettre en œuvrele partage de la capture d'écran.

14. Dispositif selon l'une des revendications 8-13, comprenant en outre :
un module de demande d'informations (307), configuré pour demander à l'utilisateur de partager la capture d'écran ou non.
